# EUROPEAN PATENT SPECIFICATION

(11) **EP 4 122 981 B1**
(45) Date of publication and mention of the grant of the patent: **07.05.2025**
(21) Application number: 22180520.3
(22) Date of filing: 22.06.2022
(51) Int. Cl.: C08K 3/36, C08L 9/06, C08L 9/00

(54) **FUNCTIONALIZED ELASTOMER BLEND FOR TIRE TREAD AND TIRE**
FUNKTIONALISIERTE ELASTOMERMISCHUNG FÜR REIFENLAUFFLÄCHE UND REIFEN
MÉLANGE D'ÉLASTOMÈRE FONCTIONNALISÉ POUR CHAPE DE PNEU ET PNEU

(30) Priority: 28.06.2021 US 202117359882
(43) Date of publication of application: 25.01.2023
(73) Proprietor: The Goodyear Tire & Rubber Company, Akron, OH 44316 (US)
(72) Inventor: ISITMAN, Nihat Ali, Hudson, 44236 (US); MARTTER, Teresa Diane, Akron, 44320 (US)
(74) Representative: Kutsch, Bernd

(56) References cited:
- EP-A1- 2 213 688
- EP-A1- 2 289 712
- EP-A1- 3 034 328
- EP-A1- 3 450 207
- EP-A1- 3 926 009
- EP-A2- 2 607 103
- US-A1- 2007 185 267
- US-A1- 2013 059 965
- US-A1- 2020 062 034

## Description

### Field of the Invention

The present invention and its exemplary embodiments relate to a rubber composition comprising a greater than 30% maximum difference in styrene content by weight between at least one or any pair of rubber elastomers in the composition. It finds particular application in conjunction with tire treads and will be described with particular reference thereto. However, it is to be appreciated that the present exemplary embodiments are also amenable to other applications.

### Background of the Invention

In rubber compositions, functionalized polymers are highly desired to maximize tire performance. They are sometimes used to improve the affinity of a given rubbery polymer for filler reinforcements, such as carbon black or silica. These polymers are known to beneficially reduce rolling resistance and to improve the tread wear characteristics of tires. However, such improvements may be realized to the detriment of wet skid (or grip) resistance. In the tire industry, a large amount of technology is directed toward balancing these viscoelastically inconsistent properties. However, tradeoffs are typically accepted between properties to realize a desired performance characteristic.

A rubber compound is desired which displays an excellent tread wear, rolling resistance, and wet skid resistance.

A rubber compound in accordance with the preamble of claim 1 is known from US 2020/0062034 A1.

Further rubber compounds comprising elastomers with different styrene content and silica are described in EP 3 304 328 A1, EP 2 607 103 A2, US 2007/185267 A1, EP 3 450 207 A1, US 2013/059965 A1 and EP 2 213 688 A1.

### Summary of the Invention

The invention relates to a rubber composition in accordance with claim 1, and to a tire in accordance with claim 13.

Dependent claims refer to preferred embodiments of the invention.

In a preferred aspect of the invention, the rubber composition has a higher resistance to abrasion compared to a control as measured by DIN abrasion, wherein the control comprises less than a 30% maximum difference in styrene content between pairs of functionalized rubber elastomers.

In a preferred aspect of the invention, the rubber composition has a similar or improved wet skid resistance compared to a control as measured by tan delta at 0°C, wherein the control comprises less than a 30% maximum difference in styrene content between pairs of functionalized rubber elastomers.

In a preferred aspect of the invention, the rubber composition has a similar or improved rolling resistance compared to a control as measured by tan delta at 30°C, wherein the control comprises less than a 30% maximum difference in styrene content between pairs of functionalized rubber elastomers.

In a preferred aspect of the invention and when compared to a control comprising less than a 30% maximum difference in styrene content between pairs of functionalized rubber elastomers, the rubber composition has a property selected from a group consisting of:
a higher resistance to abrasion as measured by DIN abrasion;
an improved wet skid resistance as measured by tan delta at 0°C;
an improved rolling resistance as measured by tan delta at 30°C; and
a combination of the above;
with all other properties preferably being similar or the same.

Detailed Description of Preferred Embodiments of the Invention

One embodiment of the disclosure is directed to a sulfur curable rubber composition comprising, based on 100 parts by weight of elastomer (phr):
(A) at least two diene elastomers, a pair of the at least two diene elastomers being characterized by a greater than 30% maximum difference in styrene content by weight; and
(B) from 60 to 180 phr of a precipitated silica filler;
wherein all the diene elastomers are functionalized to react with the silica.

In a further embodiment of the disclosure, the rubber composition is incorporated in a tire tread.

Another embodiment of the disclosure is directed to a sulfur curable rubber composition for incorporation in a tire tread. The rubber composition comprises, based on 100 parts by weight of elastomer (phr):
(A) a pair of elastomers present in an amount that totals 100 phr, the pair comprising:
   (1) greater than 50 phr of a solution polymerized styrene-butadiene rubber (s-SBR) functionalized to react with silica, and
   (2) a polybutadiene rubber functionalized to react with silica;
   wherein the pair is characterized by a greater than 30% maximum difference in styrene content by weight; and
(B) a precipitated silica filler.

The disclosed rubber composition comprises at least two diene-based elastomers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers.

The phrases "rubber" or "elastomer containing olefinic unsaturation" or "diene-based elastomer" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile, which polymerize with butadiene to form NBR, methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polyisoprene (natural or synthetic), polybutadiene and SBR. In one embodiment, one elastomer in a pair is an SBR and the other elastomer in a pair is a polybutadiene rubber.

In one embodiment, at least one elastomer is a solution polymerized styrene-butadiene rubber (S-SBR).

In one aspect of this invention, an emulsion polymerization derived styrene/butadiene (E-SBR) might be used having a medium to relatively high bound styrene content, namely, a bound styrene content of greater than 30 percent, such as, as an example only, from 30 to 45 percent.

By emulsion polymerization prepared E-SBR, it is meant that styrene and 1,3-butadiene are copolymerized as an aqueous emulsion. Such are well known to those skilled in such art. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 9 to 36 percent. However, in the preferred embodiment, an S-SBR has a bound styrene content of greater than 30 percent and, more preferably, greater than 34%.

The S-SBR can be conveniently prepared, for example, by organo lithium catalyzation in the presence of an organic hydrocarbon solvent.

In one embodiment, only one elastomer in a pair of the at least two diene elastomers are derived from styrene and butadiene. In one embodiment, cis 1,4-polybutadiene rubber (BR) may be used. Such BR can be prepared, for example, by organic solution polymerization of 1,3-butadiene.

Cis 1,4-polybutadiene rubber means polybutadiene rubber having at least a 90 percent cis 1,4-content.

The cis 1,4-polyisoprene and cis 1,4-polyisoprene natural rubber are well known to those having skill in the rubber art.

Each pair of diene elastomers is functionalized to react with the silica. The rubber composition excludes non-functionalized rubber elastomers.

Representative of functionalized elastomers are, for example, styrene/butadiene elastomers containing one or more functional groups comprised of:
(A) amine functional group reactive with hydroxyl groups on said silica or precipitated silica,
(B) siloxy functional group, including end chain siloxy groups, reactive with hydroxyl groups on said silica or precipitated silica,
(C) combination of amine and siloxy functional groups reactive with hydroxyl groups on said silica or precipitated silica,
(D) combination of thiol and siloxy (e.g. ethoxysilane) functional groups reactive with hydroxyl groups on said silica or precipitated silica,
(E) combination of imine and siloxy functional groups reactive with hydroxyl groups on said silica or precipitated silica, and
(F) hydroxyl functional groups reactive with said silica or precipitated silica.

For the functionalized elastomers, representative of amine functionalized SBR elastomers are, for example, in-chain functionalized SBR elastomers mentioned in U.S. Pat. No. 6,936,669.

Representative of a combination of amino-siloxy functionalized SBR elastomers with one or more amino-siloxy groups connected to the elastomer is, for example, HPR355^{™} from JSR and amino-siloxy functionalized SBR elastomers mentioned in U.S. Pat. No. 7,981,966.

Representative styrene/butadiene elastomers end functionalized with a silane-sulfide group are, for example, mentioned in U.S. Pat. Nos. 8,217,103 and 8,569,409.

Organic solvent polymerization prepared tin coupled elastomers such as for example, tin coupled styrene/butadiene copolymers may also be used.

Tin coupled copolymers of styrene/butadiene may be prepared, for example, by introducing a tin coupling agent during the styrene/1,3-butadiene monomer copolymerization reaction in an organic solvent solution, usually at or near the end of the polymerization reaction. Such coupling of styrene/butadiene copolymers is well known to those having skill in such art.

In practice, it is usually preferred that at least 50 percent and more generally in a range of 60 to 85 percent of the Sn (tin) bonds in the tin coupled elastomers are bonded to butadiene units of the styrene/butadiene copolymer to create Sn-dienyl bonds such as butadienyl bonds.

Creation of tin-dienyl bonds can be accomplished in a number of ways such as, for example, sequential addition of butadiene to the copolymerization system or use of modifiers to alter the styrene and/or butadiene reactivity ratios for the copolymerization. It is believed that such techniques, whether used with a batch or a continuous copolymerization system, is well known to those having skill in such art.

Various tin compounds, particularly organo tin compounds, may be used for the coupling of the elastomer. Representative of such compounds are, for example, alkyl tin trichloride, dialkyl tin dichloride, yielding variants of a tin coupled styrene/butadiene copolymer elastomer, although a trialkyl tin monochloride might be used which would yield simply a tin-terminated copolymer.

Examples of tin-modified, or coupled, styrene/butadiene copolymer elastomers might be found, for example and not intended to be limiting, in U.S. Pat. No. 5,064,901.

In one embodiment, a pair of the at least two diene elastomers are characterized by a greater than 30% maximum difference in styrene content by weight. In a preferred embodiment, each pair of the at least two diene elastomers are characterized by the greater than 30% maximum difference in styrene content by weight. Embodiments are contemplated where three or more diene elastomers are comprised in the rubber composition. In such embodiments, any pair of the at least two diene elastomers are characterized by the greater than 30% maximum difference in styrene content by weight. However, such embodiments may include a blend of functionalized and non-functionalized diene elastomers. In the preferred embodiment, any pair comprising at least one functionalized diene elastomer is characterized by the greater than 30% maximum difference in styrene content by weight. In a more preferred embodiment, all pairs of functionalized diene elastomers are characterized by the greater than 30% maximum difference in styrene content by weight.

In one embodiment, the disclosed rubber composition comprises as the diene elastomers, from 40 to 70 phr, and more preferably from 50 to 60 phr, of at least one styrene-butadiene rubber, with the remainder being at least a second diene elastomer for a combined total of 100 phr. In another embodiment, the disclosed rubber composition comprises as the diene elastomers, from 30 to 60 phr, and more preferably from 40 to 50 phr, of at least one polybutadiene rubber elastomer, with the remainder being made up of at least a second diene elastomer for a combined total of 100 phr.

In one embodiment, the disclosed rubber composition comprises as the diene elastomers, from 50 to 60 phr of a first diene elastomer and from 40 to 60 phr of a second diene elastomer for a combined total of 100 phr for the pair. In one embodiment, the rubber composition comprises an s-SBR for the majority portion of the total 100 phr and a polybutadiene for the minority portion of the total.

In one embodiment, the rubber composition may include from 20 to 200 phr of silica and, more preferably, from 60 to 180 phr.

The commonly employed siliceous pigments which may be used in the rubber compound include conventional pyrogenic and precipitated siliceous pigments (silica). In one embodiment, precipitated silica is used. The conventional siliceous pigments employed in the disclosed rubber compound are precipitated silicas such as, for example, those obtained by the acidification of a soluble silicate, e.g., sodium silicate.

Such conventional silicas might be characterized, for example, by having a BET surface area, as measured using nitrogen gas. In one embodiment, the BET surface area may be in the range of 40 to 600 square meters per gram. In another embodiment, the BET surface area may be in a range of 80 to 300 square meters per gram. The BET method of measuring surface area is described in the Journal of the American Chemical Society, Volume 60, Page 304 (1930), as well as ASTM D3037.

The conventional silica may also be characterized by having a dibutylphthalate (DBP) absorption value in a range of 100 to 400, alternatively 150 to 300.

Various commercially available silicas may be used, such as, only for example herein and without limitation, silicas commercially available from PPG Industries under the Hi-Sil trademark with designations 210 and 243; silicas available from Rhodia, with, for example, designations of Z1165MP and Z165GR; and silicas available from Degussa AG with, for example, designations VN2 and VN3.

Other fillers may be used in the rubber composition including carbon black or particulate fillers including ultra-high molecular weight polyethylene (UHMWPE), crosslinked particulate polymer gels including those disclosed in U.S. Pat. Nos. 6,242,534; 6,207,757; 6,133,364; 6,372,857; 5,395,891; or 6,127,488, and plasticized starch composite filler including that disclosed in U.S. Pat. No. 5,672,639. Such other fillers may be used in an amount ranging from 1 to 30 phr.

In one embodiment, the rubber composition may contain a conventional sulfur containing organosilicon compound. In one embodiment, the sulfur containing organosilicon compounds are 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide.

In another embodiment, suitable sulfur containing organosilicon compounds include compounds disclosed in U.S. Pat. No. 6,608,125. In one embodiment, the sulfur containing organosilicon compounds includes 3-(octanoylthio)-1-propyltriethoxysilane, CH₃(CH₂)₆C(=O)-S-CH₂CH₂CH₂Si(OCH₂CH₃)₃, which is available commercially as NXT^{™} from Momentive Performance Materials.

In another embodiment, suitable sulfur containing organosilicon compounds include those disclosed in U.S. Patent Publication No. 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr. In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 0.5 to 8 phr, with a range of from 1 to 6 phr being preferred. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), pages 344 through 346. Typical amounts of antiozonants comprise 1 to 5 phr. Typical amounts of fatty acids, if used, which can include stearic acid comprise 0.5 to 5 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 6, preferably 0.8 to 3, phr. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Preferably, the primary accelerator is a sulfenamide. If a second accelerator is used, the secondary accelerator is preferably a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition may be incorporated in a tread of a tire. The tire may be pneumatic or non-pneumatic.

The tire of the present invention may be a race tire, passenger tire, aircraft tire, agricultural, earthmover, off-the-road, or truck tire. The tire may also be a radial or bias, with a radial being preferred.

Vulcanization of a pneumatic tire of the present invention would be generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The following examples are presented for the purposes of illustrating the present invention. All parts are parts by weight unless specifically identified otherwise.

### EXAMPLES

In these examples, the effects on the performance of rubber compounds are illustrated for compounds comprising varying degrees of difference in styrene content between any pair of diene elastomers in such compounds. In the samples, at least one diene elastomer contains functional groups that can interact with silica.

Rubber compounds were mixed in a multi-step mixing procedure following the recipes in Table 1. Standard amounts of additive materials and curing techniques were also used. The rubber compounds were then cured and tested for various properties including, *inter alia,* tread wear, wet skid resistance, rolling resistance, and winter (low temperature) performance.

A control rubber compound was prepared as Sample A using a single functionalized solution polymerized SBR. In control Sample A, the difference in styrene content is null because the diene elastomer - which is an S-SBR - is not paired with at least one additional diene elastomer in the rubber compound.

For control Samples B-D, the rubber compounds each comprise two diene rubber elastomers. The difference in the styrene content between each pair of rubber elastomers varies among the control Samples B-D. The difference in the styrene content increases across the control Samples B-D, but is below 30% for each pair.

Control Sample B was prepared using two functionalized solution polymerized SBRs. Control Samples C and D were each prepared with a solution polymerized SBR and the same polybutadiene rubber, with all other ingredients being the same. For control Sample C, the S-SBR was end functionalized with groups reactive with hydroxyl groups on precipitated silica. For control Sample D, the S-SBR was also functionalized to be reacted with precipitated silica. The polybutadiene rubber further contained functional groups that are reactive with hydroxyl groups on precipitated silica.

Control Sample E was prepared using a solution polymerized SBR and a solution polymerized polybutadiene. The difference in the styrene content by weight was greater than the difference for control Samples B-D, but neither one of the diene rubbers was functionalized.

For the experimental Samples F-H, rubber compounds were each prepared using varying amounts of the same two diene rubbers. The pair of diene elastomers included a solution polymerized SBR and a solution polymerized polybutadiene, the both of which were functionalized in each pair. The difference in the styrene content between each pair of rubber elastomers was greater than 30%.

The basic formulations are illustrated in the following Table 1, which is presented in parts per 100 parts by weight of elastomers (phr).

**TABLE 1**

| | Function -alized | % Styrene | Samples | | | | | | | |
|---|---|---|---|---|---|---|---|---|---|---|
| | | | Control | | | | | Experimental | | |
| | | | A | B | C | D | E | F | G | H |
| SBR¹ | No | 34 | | | | | 52 | | | |
| SBR² | Yes | 34 | | | | | | 52 | 56 | 60 |
| SBR³ | Yes | 15 | 100 | 30 | | | | | | |
| SBR⁴ | Yes | 21 | | 70 | 85 | | | | | |
| SBR⁵ | Yes | 27 | | | | 80 | | | | |
| BR⁶ | No | 0 | | | | | 48 | | | |
| BR⁷ | Yes | 0 | | | 15 | 20 | | 48 | 44 | 40 |
| Difference in styrene % | | | 0 | 6 | 21 | 27 | 34 | 34 | 34 | 34 |
| Functionalization | | | Yes | Yes | Yes | Yes | No | Yes | Yes | Yes |
| | | | | | | | | | | |

| | | | | | | | | | | |
|---|---|---|---|---|---|---|---|---|---|---|
| ¹ Solution polymerized SBR with styrene content of 34% and 1,2-vinyl content of 38%, Tg = -24° C. extended with 37.5 phr TDAE oil, obtained as Tufdene E680 from Asahi Chemical. ² Solution polymerized SBR with styrene content of 34% and 1,2-vinyl content of 38%, Tg = -21° C. extended with 25 phr TDAE oil, obtained from LG Chem as F3438. ³ Solution polymerized SBR with styrene content of 15% and 1,2-vinyl content of 26%, Tg = -60° C. obtained from Trinseo as Sprintan^{®} SLR 3402. ⁴ Solution polymerized SBR with styrene content of 21% and 1,2-vinyl content of 50%, Tg = -23° C. obtained from Trinseo as Sprintan^{®} SLR 4602. ⁵ Solution polymerized SBR with styrene content of 27% and 1,2-vinyl content of 42%, Tg = -22° C. obtained from Japan Synthetic Rubber (JSR) Corporation as HPR355HR. ⁶ Solution polymerized polybutadiene copolymers obtained from Goodyear Chemical. ⁷ Functionalized low vinyl (12 percent) solution polymerized polybutadiene rubber, obtained as BR1261 from Zeon having a Tg of about -90° C. | | | | | | | | | | |

Various cured rubber properties of the control Samples A-E and the experimental Samples F-H are reported in the following Table 2.

**TABLE 2**

| | Samples | | | | | | | |
|---|---|---|---|---|---|---|---|---|
| | Control | | | | | Experimental | | |
| | A | B | C | D | E | F | G | H |
| **Tread Wear/Abrasion** | | | | | | | | |
| 300% Modulus, MPa | 7.9 | 8.5 | 8.8 | 9.1 | 8.9 | 9.5 | 10.1 | 9.9 |
| Tensile Strength, MPa | 20.7 | 17.4 | 19.0 | 16.8 | 19.0 | 18.6 | 19.9 | 18.8 |
| Elongation | 599 | 503 | 546 | 471 | 529 | 493 | 496 | 484 |
| DIN (lower is better) | 48 | 113 | 110 | 94 | 80 | 62 | 65 | 71 |
| **Wet Grip Indicator** | | | | | | | | |
| Tan D at 0° C. (higher the better) | 0.27 | 0.51 | 0.53 | 0.55 | 0.58 | 0.53 | 0.57 | 0.60 |
| **Rolling Resistance** | | | | | | | | |
| Tan D at 30° C. (lower the better) | 0.18 | 0.19 | 0.20 | 0.19 | 0.27 | 0.20 | 0.20 | 0.20 |
| **Winter Performance** | | | | | | | | |
| G' -20° C. (lower the better) | 8 | 29 | 36 | 38 | 54 | 35 | 38 | 45 |

As can be seen in Table 2, the overall performance properties of the rubber compounds F-H (utilizing >30% maximum difference in styrene content between a pair of functionalized rubber elastomers in the compositions) compared favorably with the performance properties of the control Samples A-E.

Control Sample A - using a single functionalized solution polymerized SBR - indicated a favorable performance relating to predicted tread wear (aka tread life), and winter performance and rolling resistance. However, control Sample A indicated a significantly poor performance relating to predicted wet skid resistance (aka wet weather grip).

For control Samples B-D - using increasing differences (each being <30%) in styrene content between pairs of functionalized elastomers - a significant improvement is observed for predicted wet skid resistance (0.51-0.55, respectively) over control Sample A (which has a value of 0.27). Further, control Samples B-D do not necessitate a tradeoff between the improved wet skid resistance and the predicted rolling resistance of such compounds. The rolling resistance (0.19, 0.20, and 0.19 respectively) of control Samples B-D is similar to or slightly better than the rolling resistance (0.18) of control Sample A. However, a substantial decrease is observed for predicted tread wear performance. For example, the abrasion value of control Sample A is 48, while the values for control Samples B-D are 113, 110, and 94 respectively. Yet, these values gradually improve as the difference in styrene content increases (from 6% to 21% to 27%, respectively) between the pairs of functionalized elastomers. Therefore, a gradual improvement is observed for tread wear performance as the difference in styrene content increases between pairs of elastomers.

For control Sample E - using a non-functionalized S-SBR and a non-functionalized polybutadiene - the performance properties deteriorate over those of the inventive Samples F-H. Although the difference in the styrene content (>30%) between the elastomer pairs is about the same as experimental Samples F-H, it is believed that the absence of functional groups reactive to silica on the elastomers of control Sample E contributes to the poor performance.

A significant improvement in predicted performance is observed for the experimental Samples F-H, which each comprise a >30% maximum difference in styrene content between a pair of functionalized rubber elastomers in the composition. The following observations were made for the experimental Samples F-H over control Samples B-D having <30% maximum difference in styrene content between elastomer pairs: (1) a significantly improved abrasion resistance; (2) a slightly improved or similar predicted wet skid resistance; (3) a similar predicted rolling resistance; and (4) an acceptable predicted snow performance.

DIN abrasion, which is a measurement of compound abradibility, shows significantly lower values (62, 65, 71, respectively) for experimental Samples F-H. This indicates that experimental Samples F-H provide better wear resistance, i.e., improved tread wear. Control samples B-D have much higher values (113, 110, and 94, respectively), which indicates a lower resistance to abrasion.

Higher tan delta values at 0°C. are indicative of better traction characteristics. The wet indicator values for experimental Samples F-H are 0.53, 0.57 and 0.60, respectively, which is slightly improved and/or similar to the predicted wet indicator values (0.51, 0.53, and 0.55) of control Samples B-D.

The tan delta values at 30°C. are indicative of hysteresis and, generally, a lower hysteresis corresponds to a better or improved rolling resistance. The predicted rolling resistance values for experimental Samples F-H are 0.20, which is the same and/or similar to the predicted rolling resistance (0.19 or 0.20) of Samples B-D. This indicates that the rolling resistance approaches control Sample A, is maintained over control Samples B-D, and is significantly improved over control Sample E.

The winter properties for experimental Samples F-H were significantly improved over control Sample E as evidenced by a reduced storage moduli G' at -20°C. The winter (low temperature) properties for the experimental Samples F-H approach control Samples B-D.

Below, Table 3 summarizes the results discussed *supra.*

**TABLE 3**

| | | **Performance Characteristics** | | | |
|---|---|---|---|---|---|
| | | Tread Wear | Rolling Resistance | Wet Skid Resistance | Winter Snow Performance |
| **Ctl** | A | Excellent | Excellent | Low | Excellent |
| | B | Decreased over A | Maintained over A | Improved over A | Decreased over A |
| | C | Decreased over A | Maintained over A | Improved over A | Decreased over A |
| | D | Decreased over A | Maintained over A | Improved over A | Decreased over A |
| | E | Worsened over F-H | Worsened over F-H | | Worsened over F-H |
| **Exp'l** | F | Improved over B-D | Approaches and/or same as A-D | Same or slightly improved over B-D | Approaches and/or same as A-D |
| | G | Improved over B-D | Approaches and/or same as A-D | Same or slightly improved over B-D | Approaches and/or same as A-D |
| | H | Improved over B-D | Approaches and/or same as A-D | Same or slightly improved over B-D | Approaches and/or same as A-D |
| **Concluded:** | | Advantage over B-E | Similar/Acceptable | Similar/Improved | Similar/Acceptable |

Therefore, a significant advantage is observed in the predicted tread wear performance of the inventive compounds over the control compounds that comprise at least two diene elastomers. Also, a slight advantage is observed in the predicted rolling resistance of the inventive compounds over the control compounds that comprise at least two diene elastomers. An acceptable balance is also maintained between wet skid resistance and winter performance.

It is hereby concluded that the presently disclosed rubber compounds are useful for tire treads when such compounds comprise more than a 30% maximum difference in styrene content between a pair of functionalized rubber elastomers, which are both reactive to silica.

## Claims

1. A sulfur curable rubber composition comprising, based on 100 parts by weight of elastomer (phr):
(A) at least two diene elastomers, wherein a pair of the at least two diene elastomers has a greater than 30% difference in styrene content by weight; and
(B) from 20 to 200 phr or from 60 to 180 phr of a silica filler, preferably a precipitated silica filler;
**characterized in that** all elastomers in the rubber composition are functionalized to react with silica.

2. The sulfur curable rubber composition of claim 1, wherein the rubber composition has a greater than 30% difference in styrene content between every pair of the at least two elastomers in the composition.

3. The sulfur curable rubber composition of at least one of the previous claims, wherein at least one elastomer is a functionalized polybutadiene rubber; and/or wherein at least one elastomer is a styrene-butadiene rubber (SBR), preferably a solution polymerized styrene-butadiene rubber (s-SBR).

4. The sulfur curable rubber composition of claim 3, wherein the SBR or the s-SBR has a styrene content equal to or greater than 30%, and/or wherein the SBR or the s-SBR is tin or silicon coupled.

5. The sulfur curable rubber composition of at least one of the previous claims, wherein the rubber composition is free of non-functionalized rubber elastomers.

6. The sulfur curable rubber composition of at least one of the previous claims, wherein a first elastomer, preferably the SBR or s-SBR, is present in a range of from 45 to 65 phr, and wherein a second elastomer, preferably the functionalized polybutadiene rubber rubber, is present in a range of from 35 to 55 phr.

7. The sulfur curable rubber composition of at least one of the previous claims, wherein the at least two elastomers comprise:
a functionalized solution polymerized styrene-butadiene rubber (s-SBR) being present in an amount greater than 50 phr; and
a functionalized polybutadiene rubber being present in an amount making up a remainder of the total.

8. The sulfur curable rubber composition of at least one of the previous claims, wherein the amount of the SBR or s-SBR is from 50 to 60 phr; and/or wherein the amount of the polybutadiene is from 40 to 50 phr.

9. The sulfur curable rubber composition of at least one of the previous claims, wherein a pair of the at least two diene elastomers or any combination of pairs of the at least two elastomers in the composition has a difference in styrene content by weight in a range of from greater than 30% to 40%.

10. The sulfur curable rubber composition of at least one of the previous claims, wherein only one elastomer in a pair of the at least two diene elastomers is derived from styrene and butadiene.

11. The sulfur curable rubber composition of at least one of the previous claims, wherein the rubber composition is incorporated in a tire tread.

12. The sulfur curable rubber composition of at least one of the previous claims, wherein the composition is for incorporation in a tire tread and comprises, based on 100 parts by weight of elastomer (phr):
(A) a pair of elastomers present in an amount that totals 100 phr, the pair comprising:
(1) greater than 50 phr of a solution polymerized styrene-butadiene rubber (s-SBR) functionalized to react with silica, and
(2) a polybutadiene rubber functionalized to react with silica.

13. A tire having a component comprising the rubber composition of at least one of the previous claims as a sulfur cured rubber composition.

14. The tire of claim 13 wherein the component is a tread and the tire is a pneumatic tire.

## Patentansprüche

1. Mit Schwefel vulkanisierbare Kautschuk-Zusammensetzung, die, bezogen auf 100 Gewichtsteile Elastomer (ThK), Folgendes umfasst:
(A) mindestens zwei Dienelastomere; wobei das Paar der mindestens zwei Dienelastomere einen Unterschied von mehr als 30 % in Bezug auf den Styrolgehalt in Gewicht besitzt; und
(B) von 20 bis 200 ThK oder von 60 bis 180 ThK eines Füllstoffs auf Silica-Basis, vorzugsweise eines Füllstoffs auf der Basis von gefällter Silica ;
**dadurch gekennzeichnet, dass** alle Elastomere in der Kautschuk-Zusammensetzung funktionalisiert sind, um mit Silica zu reagieren.

2. Mit Schwefel vulkanisierbare Kautschuk-Zusammensetzung nach Anspruch 1, wobei die Kautschuk-Zusammensetzung einen Unterschied von mehr als 30 % in Bezug auf den Styrolgehalt in Gewicht zwischen jedem Paar der mindestens zwei Elastomere in der Zusammensetzung besitzt.

3. Mit Schwefel vulkanisierbare Kautschuk-Zusammensetzung nach mindestens einem der vorhergehenden Ansprüche, wobei mindestens ein Elastomer einen funktionalisierten Polybutadienkautschuk darstellt; und/oder wobei mindestens ein Elastomer einen Styrol-Butadien-Kautschuk (SBR), vorzugsweise einen Styrol-Butadien-Kautschuk, der in Lösung polymerisiert worden ist (s-SBR), darstellt.

4. Mit Schwefel vulkanisierbare Kautschuk-Zusammensetzung nach Anspruch 3, wobei das SBR oder s-SBR einen Styrolgehalt besitzt, der gleich oder größer als 30 % ist; und/oder wobei das SBR oder s-SBR mit Zinn oder Silizium gekoppelt ist.

5. Mit Schwefel vulkanisierbare Kautschuk-Zusammensetzung nach mindestens einem der vorhergehenden Ansprüche, wobei die Kautschuk-Zusammensetzung frei von Kautschuk-Elastomeren ist, die nicht funktionalisiert wurden.

6. Mit Schwefel vulkanisierbare Kautschuk-Zusammensetzung nach mindestens einem der vorhergehenden Ansprüche, wobei ein erstes Elastomer, vorzugsweise das SBR oder s-SBR, in einem Bereich von 45 bis 65 ThK vorhanden ist; und wobei ein zweites Elastomer, vorzugsweise der funktionalisierte Polybutadienkautschuk, in einem Bereich von 35 bis 55 ThK vorhanden ist.

7. Mit Schwefel vulkanisierbare Kautschuk-Zusammensetzung nach mindestens einem der vorhergehenden Ansprüche, wobei die mindestens zwei Elastomere Folgfendes umfassen :
einen funktionalisierten Styrol-Butadien-Kautschuk, der in Lösung polymerisiert worden ist (s-SBR), der in einer Menge von mehr als 50 ThK vorhanden ist; und
einen funktionalisierten Polybutadienkautschuk, der in einer Menge vorhanden ist, die einen Rest der Gesamtmenge ausmacht.

8. Mit Schwefel vulkanisierbare Kautschuk-Zusammensetzung nach mindestens einem der vorhergehenden Ansprüche, wobei die Menge an SBR oder s-SBR von 50 bis 60 ThK beträgt; und/oder wobei die Menge an Polybutadien von 40 bis 50 ThK beträgt.

9. Schwefelvulkanisierbare Kautschuk-Zusammensetzung nach mindestens einem der vorhergehenden Ansprüche, wobei ein Paar der mindestens zwei Dienelastomere oder eine beliebige Kombination von Paaren der mindestens zwei Elastomere in der Zusammensetzung einen Unterschied in dem Gewichtsgehalt an Styrol besitzt, der in einem Bereich von mehr als 30 % bis 40 % liegt.

10. Mit Schwefel vulkanisierbare Kautschuk-Zusammensetzung nach mindestens einem der vorhergehenden Ansprüche, wobei ein einzelnes Elastomer in einem Paar der mindestens zwei Dienelastomere von Styrol und Butadien abgeleitet ist.

11. Mit Schwefel vulkanisierbare Kautschuk-Zusammensetzung nach mindestens einem der vorhergehenden Ansprüche, wobei die Kautschuk-Zusammensetzung in eine Lauffläche eines Reifens eingearbeitet wird.

12. Mit Schwefel vulkanisierbare Kautschuk-Zusammensetzung nach mindestens einem der vorhergehenden Ansprüche, wobei die Zusammensetzung zur Einarbeitung in eine Lauffläche eines Reifens bestimmt ist und, bezogen auf 100 Gewichtsteile Elastomer (ThK), Folgendes umfasst:
(A) ein Paar Elastomere, die in einer Menge vorhanden sind, die insgesamt 100 ThK beträgt; wobei das Paar Folgendes umfasst:
(1) mehr als 50 ThK eines in Lösung polymerisierten Styrol-Butadien-Kautschuks (s-SBR), der funktionalisiert wurde, um mit Silica zu reagieren; und
(2) einen Polybutadien-Kautschuk, der funktionalisiert wurde, um mit Silica zu reagieren.

13. Reifen, der eine Komponente besitzt, die die Kautschuk-Zusammensetzung gemäß mindestens einem der vorhergehenden Ansprüche in der Form einer Kautschuk-Zusammensetzung umfasst, die mit Schwefel vulkanisiert worden ist.

14. Reifen nach Anspruch 13, wobei die Komponente eine Lauffläche ist und der Reifen ein Luftreifen ist.

## Revendications

1. Composition de caoutchouc vulcanisable au soufre, qui comprend, en se basant sur 100 parties en poids d'élastomère (phr) :
(A) au moins deux élastomères diéniques ; dans laquelle la paire desdits au moins deux élastomères diéniques possèdent une différence supérieure à 30 % en ce qui concerne la teneur en styrène en poids ; et
(B) de 20 à 200 phr ou de 60 à 180 phr d'une matière de charge à base de silice, de préférence une matière de charge à base de silice précipitée ;
**caractérisée en ce que** tous les élastomères dans la composition de caoutchouc sont fonctionnalisés pour entrer en réaction avec la silice.

2. Composition de caoutchouc vulcanisable au soufre selon la revendication 1, dans laquelle la composition de caoutchouc possède une différence supérieure à 30 % en ce qui concerne la teneur de styrène en poids entre chaque paire desdits au moins deux élastomères dans la composition.

3. Composition de caoutchouc vulcanisable au soufre selon au moins une des revendications précédentes, dans laquelle au moins un élastomère représente un caoutchouc de polybutadiène qui a été fonctionnalisé ; et/ou dans laquelle au moins un élastomère représente un caoutchouc de styrène-butadiène (SBR), de préférence un caoutchouc de styrène-butadiène qui a été polymérisé en solution (s-SBR).

4. Composition de caoutchouc vulcanisable au soufre selon la revendication 3, dans laquelle le SBR ou le s-SBR possède une teneur en styrène qui est égale ou supérieure à 30 % ; et/ou dans laquelle le SBR ou le s-SBR est couplé à de l'étain ou à du silicium.

5. Composition de caoutchouc vulcanisable au soufre selon au moins une des revendications précédentes, dans laquelle la composition de caoutchouc est exempte d'élastomères de caoutchouc qui n'ont pas été fonctionnalisés.

6. Composition de caoutchouc vulcanisable au soufre selon au moins une des revendications précédentes, dans laquelle un premier élastomère, de préférence le SBR ou le s-SBR, est présent dans une plage qui s'élève de 45 à 65 phr ; et dans laquelle un deuxième élastomère, de préférence le caoutchouc de polybutadiène qui a été fonctionnalisé, est présent dans une plage qui s'élève de 35 à 55 phr.

7. Composition de caoutchouc vulcanisable au soufre selon au moins une des revendications précédentes, dans laquelle lesdits au moins deux élastomères comprennent :
un caoutchouc de styrène-butadiène fonctionnalisé qui a été polymérisé en solution (s-SBR), qui est présent en une quantité supérieure à 50 phr ; et
un caoutchouc de polybutadiène fonctionnalisé qui est présent en une quantité qui constitue un reste du total.

8. Composition de caoutchouc vulcanisable au soufre selon au moins une des revendications précédentes, dans laquelle la quantité du SBR ou du s-SBR s'élève de 50 à 60 phr ; et/ou dans laquelle la quantité du polybutadiène s'élève de 40 à 50 phr.

9. Composition de caoutchouc vulcanisable au soufre selon au moins une des revendications précédentes, dans laquelle une paire desdits au moins deux élastomères diéniques ou n'importe quelle combinaison de paires desdits au moins deux élastomères dans la composition possède une différence, en ce qui concerne la teneur en poids en styrène, qui se situe dans une plage allant d'une valeur supérieure à 30 % jusqu'à 40 %.

10. Composition de caoutchouc vulcanisable au soufre selon au moins une des revendications précédentes, dans laquelle un seul élastomère dans une paire desdits au moins deux élastomères diéniques dérive du styrène et du butadiène.

11. Composition de caoutchouc vulcanisable au soufre selon au moins une des revendications précédentes, dans laquelle la composition de caoutchouc est incorporée dans une bande de roulement d'un bandage.

12. Composition de caoutchouc vulcanisable au soufre selon au moins une des revendications précédentes, dans laquelle la composition est destinée à son incorporation dans une bande de roulement d'un bandage et comprend, en se basant sur 100 parties en poids d'élastomère (phr) :
(A) une paire d'élastomères qui sont présents en une quantité qui s'élève au total à 100 phr ; dans laquelle la paire comprend :
(1) plus de 50 phr d'un caoutchouc de styrène-butadiène qui a été polymérisé en solution (s-SBR), fonctionnalisé pour entrer en réaction avec de la silice ; et
(2) un caoutchouc de polybutadiène qui a été fonctionnalisé pour entrer en réaction avec de la silice.

13. Bandage qui possède un composant comprenant la composition de caoutchouc en conformité avec au moins une des revendications précédentes sous la forme d'une composition de caoutchouc qui a été vulcanisé au soufre.

14. Bandage selon la revendication 13, dans lequel le composant est une bande de roulement et le bandage est un bandage pneumatique.
